# FASCICULE DE BREVET EUROPEEN

(11) **EP 4 002 194 B1**
(45) Date de publication et mention de la délivrance du brevet: **17.05.2023**
(21) Numéro de dépôt: 21207210.2
(22) Date de dépôt: 09.11.2021
(51) Int. Cl.: G06K 7/00

(54) **DISPOSITIF POUR L'ENRÔLEMENT D'UNE CARTE À MICROCIRCUIT**
VORRICHTUNG ZUR ERFASSUNG EINER MIKROSCHALTKREISKARTE
DEVICE FOR ENROLMENT OF A MICROCIRCUIT BOARD

(30) Priorité: 12.11.2020 FR 2011618
(43) Date de publication de la demande: 25.05.2022
(73) Titulaire: STMicroelectronics (Rousset) SAS, 13790 Rousset (FR); STMicroelectronics (Grand Ouest) SAS, 72100 Le Mans (FR)
(72) Inventeur: GOUABAU, Frederic, 35830 Betton (FR); ROUY, Olivier, 13790 Peynier (FR)
(74) Mandataire: Cabinet Beaumont

(56) Documents cités:
- EP-A1- 3 570 239
- EP-A1- 3 608 833
- EP-A1- 3 734 493

## Description

### Domaine technique

La présente description concerne de façon générale les dispositifs électroniques et, plus particulièrement, les cartes à microcircuit ("smart card" en anglais).

### Technique antérieure

De nombreuses applications font usage de cartes à microcircuit, par exemple des cartes de paiement, des cartes de transport, des cartes d'identification personnelle, etc. Parmi les cartes à microcircuit actuelles, on connaît notamment des cartes équipées d'un capteur biométrique. Le capteur biométrique permet typiquement d'effectuer des vérifications d'identité, par exemple lors de chaque utilisation de la carte.

Pour cela, une carte à microcircuit équipée d'un capteur biométrique doit subir une étape d'enrôlement de son utilisateur légitime. L'étape d'enrôlement consiste à obtenir, grâce au capteur biométrique, des données biométriques de l'utilisateur légitime de la carte, par exemple des données représentatives d'une empreinte digitale de l'utilisateur lorsque le capteur biométrique est un capteur d'empreinte digitale. Ces données biométriques, dites de référence, sont enregistrées dans la carte de sorte que, lors d'une utilisation ultérieure de la carte, par exemple pour valider un paiement, après que la carte ait acquise des données biométriques d'un utilisateur courant de la carte, les données biométriques acquises puissent être comparées aux données biométriques de référence. Si les données biométriques acquises correspondent aux données biométriques de référence, l'utilisateur courant de la carte est identifié comme étant l'utilisateur légitime de la carte, c'est-à-dire l'utilisateur enregistré, ce qui permet par exemple de valider l'opération en cours, par exemple un paiement. A l'inverse, si les données biométriques acquises ne correspondent pas aux données biométriques de référence, l'utilisateur courant de la carte est identifié comme étant un utilisateur frauduleux, ce qui permet par exemple d'invalider l'opération en cours, par exemple un paiement.

On connaît des dispositifs configurés pour coopérer avec une carte à microcircuit comportant un capteur biométrique. Ces dispositifs connus comprennent une batterie pour fournir une alimentation à la carte, par exemple lors de la phase d'enrôlement. En outre, afin de guider l'utilisateur, par exemple lors de la phase d'enrôlement, ces dispositifs peuvent comprendre des diodes électroluminescentes ("light emitting diode" ou LEDs en anglais), commandées par la carte. Ces dispositifs peuvent également être dépourvus de diodes électroluminescentes, ces dernières étant alors prévues sur la carte, ce qui complexifie la carte et sa fabrication.

La demande de brevet européen EP 3 734 493 A1 décrit un étui semi-rigide d'enrôlement pour carte à puce. Un capteur biométrique de la carte reste accessible à l'utilisateur hors de l'étui pour réaliser l'enrôlement. Des résistances connectent le plot de l'étui pour le contact C7 à deux diodes LEDs.

La demande de brevet européen EP 3 570 239 A1 décrit un système d'enrôlement du détenteur d'un dispositif de transaction biométrique. Le lecteur / connecteur peut comprendre des indicateurs LED pilotés par des signaux provenant de la carte.

### Résumé de l'invention

Il existe un besoin de pallier tout ou partie des inconvénients des dispositifs connus décrits ci-dessus.

Par exemple, il serait souhaitable de prévoir un dispositif configuré pour fournir une alimentation à une carte à microcircuit comprenant un capteur biométrique, qui soit dépourvu de batterie. Il serait, par exemple, également souhaitable qu'un tel dispositif comprennent des diodes électroluminescentes qui puissent être commandées par la carte à microcircuit, en particulier lors d'une phase d'enrôlement de la carte.

Ainsi, un mode de réalisation pallie tout ou partie des inconvénients des dispositifs connus configurés pour fournir une alimentation à une carte à microcircuit munie d'un capteur biométrique, par exemple lors d'une phase d'enrôlement de la carte.

Un mode de réalisation prévoit un dispositif comprenant :
un premier noeud configuré pour recevoir une tension d'alimentation ;
un deuxième noeud configuré pour recevoir une tension de référence ;
un premier connecteur configuré pour recevoir une carte à microcircuit, le premier connecteur comprenant :
   - un premier contact électrique connecté au premier noeud et configuré pour venir au contact d'une première zone de contact électrique de la carte destinée à recevoir la tension d'alimentation,
   - un deuxième contact électrique connecté au deuxième noeud et configuré pour venir au contact d'une deuxième zone de contact électrique de la carte destinée à recevoir la tension de référence, et
      - un troisième contact électrique configuré pour venir au contact d'une troisième zone de contact électrique de la carte correspondant à une sortie trois états ; une première diode électroluminescente ayant une anode reliée au troisième contact et une cathode reliée au deuxième noeud ; et
une deuxième diode électroluminescente ayant une cathode reliée au troisième contact et une anode reliée au premier noeud ;
une première résistance connectée en série avec la première diode entre le deuxième noeud et le troisième contact ; et une deuxième résistance connectée en série avec la deuxième diode entre le premier noeud et le troisième contact ;
une troisième résistance reliant l'anode de la deuxième diode à la cathode de la première diode; dans lequel les valeurs desdites résistances sont déterminées de manière que :
   la première diode est allumée et la deuxième diode est éteinte lorsque la sortie trois états est à la tension d'alimentation ;
   la première diode est éteinte et la deuxième diode est allumée lorsque la sortie trois états est à la tension de référence ; et
   les première et deuxième diodes sont éteintes lorsque la sortie trois états est dans un état de haute impédance.

Selon un mode de réalisation, la sortie trois états est de type entrée/sortie à usage générale, GPIO.

Selon un mode de réalisation, le premier connecteur comprend en outre un quatrième contact électrique connecté au deuxième noeud ou au premier noeud et configuré pour venir au contact d'une quatrième zone de contact électrique de la carte configurée pour recevoir un signal d'horloge.

Selon un mode de réalisation, le premier connecteur comprend en outre un cinquième contact électrique connecté au premier noeud et configuré pour venir au contact d'une cinquième zone de contact électrique de la carte configurée pour recevoir un signal d'initialisation.

Selon un mode de réalisation, le dispositif comprend en outre un deuxième connecteur configuré pour coopérer avec une source d'alimentation et pour fournir la tension d'alimentation au premier noeud et la tension de référence au deuxième noeud, le dispositif étant dépourvu de batterie.

Selon un mode de réalisation, le deuxième connecteur est de type bus série universel, USB.

Selon un mode de réalisation, le deuxième connecteur comprend un circuit d'interface configuré pour recevoir une puissance électrique d'alimentation lorsque le deuxième connecteur est couplé à un connecteur complémentaire de la source d'alimentation, et pour fournir la tension de référence et la tension d'alimentation à partir d'une puissance électrique d'alimentation délivrée par la source d'alimentation.

Selon un mode de réalisation, la carte est conforme aux normes ISO/IEC 7816-1, ISO/IEC 7816-2 et ISO/IEC 7816-3, la carte appartenant de préférence à la classe A de la norme ISO/IEC 7816-3.

Selon un mode de réalisation, la première zone de contact correspond au contact C1 des normes ISO/IEC 7816-2 et ISO/IEC 7816-3, la deuxième zone de contact correspond au contact C5 des normes ISO/IEC 7816-2 et ISO/IEC 7816-3, et la troisième zone de contact correspond au contact C7 des normes ISO/IEC 7816-2 et ISO/IEC 7816-3.

Selon un mode de réalisation, la tension d'alimentation, référencée par rapport à la tension de référence, est comprise entre 4,75 V et 5,25 V.

Selon un mode de réalisation, le dispositif comprend un boitier configuré pour permettre la réception de la carte par le premier connecteur et pour permettre à un utilisateur de voir de la lumière émise par les diodes, des connexions reliant les contacts électriques et les premier et deuxième noeuds entre eux et aux diodes étant disposées à l'intérieur du boîtier.

Un mode de réalisation prévoit un procédé d'utilisation d'un dispositif tel que décrit, dans lequel :
la première diode est allumée et la deuxième diode est éteinte en appliquant la tension d'alimentation sur le troisième contact ;
la première diode est éteinte et la deuxième diode est allumée en appliquant la tension de référence sur le troisième contact ; et
les première et deuxième diodes sont éteintes en appliquant un état haute impédance sur le troisième contact.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de manière très schématique et en vue de dessus, un exemple d'une carte à microcircuit munie d'un capteur biométrique, du type auquel s'appliquent les modes de réalisation décrits ;
la figure 2 représente, de manière très schématique et en vue de dessus, un mode de réalisation d'un dispositif configuré pour coopérer avec une carte du type de celle de la figure 1 ; et
la figure 3 représente, de manière très schématique et en vue de dessus, un autre mode de réalisation d'un dispositif configuré pour coopérer avec une carte du type de celle de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les utilisations usuelles d'une carte à microcircuit munie d'un capteur biométrique n'ont pas été détaillées, les modes de réalisation décrits étant compatibles avec ces utilisations usuelles.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Dans la suite de la description, sauf indication contraire, des premier et deuxième composants sont dit connectés en série entre des premier et deuxième noeuds lorsqu'une borne du premier composant est reliée, par exemple connectée, au premier noeud, une autre borne du premier composant est reliée, par exemple connectée, à une borne du deuxième composant, et l'autre borne du deuxième composant est reliée, par exemple connectée, au deuxième noeud, même si le courant traversant le premier composant est différent du courant traversant le deuxième composant.

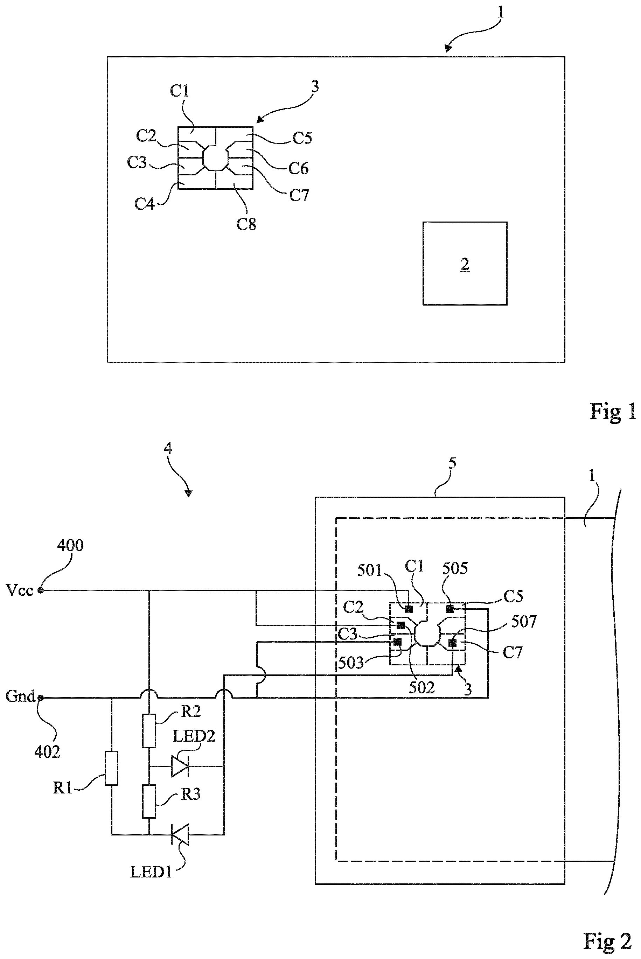

La figure 1 représente, de manière très schématique et en vue de dessus, un exemple d'une carte 1 à microcircuit munie d'un capteur biométrique 2, du type auquel s'appliquent les modes de réalisation décrits.

De manière classique, la carte 1 a une forme sensiblement rectangulaire en vue de dessus. A titre d'exemple, la carte 1 a, en vue de dessus, une largeur égale à 53,98 mm, ce qui est par exemple conforme à la norme ISO/IEC 7816-1. A titre d'exemple, la carte 1 a une épaisseur (mesurée orthogonalement au plan de la figure 1) égale à 0,76 mm, ce qui est par exemple conforme à la norme ISO/IEC 7816-1.

La carte 1 comprend une surface 3 de contact électrique. De préférence, la surface 3 a, en vue de dessus, une forme sensiblement rectangulaire. De préférence, en vue de dessus, les grands côtés de la carte 1 sont parallèles aux grands côtés de la surface 3, les petits côtés de la carte 1 étant parallèles aux petits côtés de la surface 3. A titre d'exemple, la surface 3 a, en vue de dessus, une largeur égale à 9,23 mm et une longueur égale à 9,62 mm, ce qui est par exemple conforme à la norme ISO/IEC 7816-1. A titre d'exemple, la surface 3 est disposée à 9,07 mm d'un grand côté de la carte 1 (en haut en figure 1), et à 10,25 mm d'un petit côté de la carte 1 (à gauche en figure 1), ce qui est par exemple conforme à la norme ISO/IEC 7816-1.

La surface 3 comprend plusieurs zones de contact électrique, par exemple huit zones de contact C1, C2, C3, C4, C5, C6, C7 et C8. Les zones C1, C2, C3, C4 sont par exemple agencées, dans cet ordre, le long d'un petit côté de la surface 3, les zones C5, C6, C7 et C8 étant agencées, dans cet ordre, le long de l'autre petit côté de la carte 1. A titre d'exemple, la zone C1 est située dans celui des coins de la surface 3 qui est le plus près d'un coin de la carte 1 (le coin en haut et à gauche en figure 1).

En particulier, la zone de contact C1 est configurée pour recevoir une tension d'alimentation de la carte 1, la zone de contact C5 est configurée pour recevoir une tension de référence de la carte 1, typiquement la masse, et la zone de contact C7 est configurée pour servir de sortie trois états à la carte 1. Dit autrement, la carte 1 est configurée pour sélectivement appliquer une tension haute sur la sortie C7, cette tension haute étant typiquement égale à la tension d'alimentation reçue sur la zone C1, pour appliquer une tension basse sur la sortie C7, cette tension basse étant typiquement égale à la tension de référence reçue sur la zone C5, et pour placer la sortie C7 dans un état de haute impédance, ou, dit autrement, pour n'appliquer aucune tension sur la sortie C7 qui est alors flottante.

A titre d'exemple, la zone de contact C1 est configurée pour recevoir une tension d'alimentation, référencée par rapport à la tension de référence, qui est comprise entre 4,75 V et 5,25 V, ce qui est compatible avec les cartes de classe A de la norme ISO/IEC 7816-3.

A titre d'exemple, la zone de contact C7 correspond à une entrée/sortie de la carte 1, de type entrée/sortie à usage général ("general purpose input/output"), ou GPIO.

A titre d'exemple, les zones de contacts C1, C5 et C7 correspondent aux contacts C1, C5 et C7 des normes ISO/IEC 7816-2 et ISO/IEC 7816-3.

A titre d'exemple, la zone de contact C3 est configurée pour recevoir un signal d'horloge, la zone de contact C3 correspondant par exemple au contact C3 des normes ISO/IEC 7816-2 et ISO/IEC 7816-3.

A titre d'exemple, la zone de contact C2 est configurée pour recevoir un signal d'initialisation, la zone de contact C2 correspondant par exemple au contact C2 des normes ISO/IEC 7816-2 et ISO/IEC 7816-3.

A titre d'exemple, les zones de contact C4, C6 et C8 correspondent aux contacts C4, C6 et C8 des normes ISO/IEC 7816-2 et ISO/IEC 7816-3.

Bien que l'on ait représenté en figure 1 le cas où la surface 3 est disposée du côté de la face supérieure de la carte 1, et est donc visible en vue de dessus, dans d'autres cartes 1, cette surface 3 est disposée du côté d'une face inférieure de la carte 1.

Le capteur biométrique 2 est de préférence un capteur d'empreinte digitale. Dans l'exemple de la figure 1, le capteur 2 est disposé du côté de la même face de la carte 1 que la surface de contact électrique 3, à savoir la face supérieure de la carte 1 dans l'exemple de la figure 1. Toutefois, ces deux éléments 2 et 3 peuvent également être tous les deux disposés du côté de la face inférieure de la carte 1, ou peuvent être disposés respectivement sur deux faces différentes de la carte 1.

A titre d'exemple, la carte 1 ne comprend pas diode électroluminescente et n'est donc pas en mesure d'afficher elle-même des informations, ou signaux lumineux, à destination d'un utilisateur, par exemple lors d'une phase d'enrôlement.

La figure 2 représente, de manière très schématique et en vue de dessus, un mode de réalisation d'un dispositif 4 configuré pour coopérer avec une carte du type de celle de la figure 1, par exemple avec la carte 1 de la figure 1 comme cela est représenté en figure 2.

Le dispositif 4 comprend deux noeuds 400 et 402. Le noeud 400 est configuré pour recevoir une tension d'alimentation Vcc. Le noeud 402 est configuré pour recevoir une tension de référence Gnd. La tension Vcc est référencée au potentiel du noeud 402.

Le dispositif 4 comprend en outre un connecteur 5, représenté ici sous la forme d'un bloc. Le connecteur 5 est configuré pour recevoir la carte 1, ou, dit autrement, pour coopérer avec la carte 1. Par exemple, le connecteur 5 est configuré pour que la carte 1 puisse être au moins partiellement insérée dans le connecteur 5, par exemple de manière que la surface 3 de contact électrique de la carte 1 soit située à l'intérieur du connecteur 5 lorsque la carte 1 est insérée dans le connecteur 5, et, de préférence, que le capteur 2 reste situé hors du connecteur 5 de manière à rester accessible à un utilisateur.

Le connecteur 5 comprend des contacts électriques configurés pour venir au contact de zones de contact électrique correspondantes de la surface 3 de la carte 1, lorsque la carte 1 est disposée, par exemple insérée, dans le connecteur 5. En figure 2, la portion de la carte 1 insérée dans le connecteur 5, la surface de contact 3 de la carte 1 et les zones de contact définies dans la surface 3 sont représentées en traits pointillés.

Plus particulièrement, le connecteur 5 comprend un contact 501 configuré pour venir au contact de la zone de contact C1 de la carte 1, un contact 505 configuré pour venir au contact de la zone de contact C5 de la carte 1, et un contact 507 configuré pour venir au contact de la zone de contact C7 de la carte 1, lorsque la carte 1 est insérée dans le connecteur 5.

Le dispositif 4 comprend en outre une diode électroluminescente LED1 et une diode électroluminescente LED2. La diode LED1 a son anode reliée, par exemple connectée, au contact 507 du connecteur 5, et sa cathode reliée, par exemple connectée, au noeud 402. La diode LED2 a sa cathode reliée, par exemple connectée, au contact 507, et son anode reliée, par exemple connectée, au noeud 400.

Selon un mode de réalisation, l'une des diodes LED1 et LED2, par exemple la diode LED1, est configurée pour émettre de la lumière rouge, et l'autre des diodes LED1 et LED2, par exemple la diode LED2, est configurée pour émettre de la lumière verte.

De préférence, le dispositif 4 ne comprend aucune batterie. Le dispositif 4 est alors configuré pour être relié à une source d'alimentation électrique, de manière que les tensions Vcc et Gnd soient fournies aux noeuds respectifs 400 et 402 à partir de la source d'alimentation à laquelle est relié le dispositif 4.

Dans le dispositif 4, le noeud 400 est relié, de préférence connecté, au contact 501, le noeud 402 étant relié, de préférence connecté, au contact 505. Ainsi, lorsque la tension Vcc est présente sur le noeud 400 et que la tension de référence Gnd est présente sur le noeud 402, la carte 1 reçoit ces tensions Vcc et Gnd sur ses zones de contact respectives C1 et C5. Il en résulte que la carte 1 est alimentée par le dispositif 4, et plus particulièrement par la tension Vcc.

En outre, dans le dispositif 4, lorsque la carte 1 est alimentée par la tension Vcc, la carte 1 est en mesure de commander les diodes LED1 et LED2, et, plus particulièrement, la carte 1 est en mesure de commander les diodes LED1 et LED2 au moyen de sa sortie C7. En effet, les tensions de seuil des diodes LED1 et LED2 sont, en pratique, plus faibles que la tension d'alimentation Vcc, d'où il résulte que :
- lorsque la tension de référence Gnd est appliquée par la carte 1 sur sa sortie C7, la diode LED2 émet de la lumière et la diode LED1 est éteinte ;
- lorsque la tension d'alimentation Vcc est appliquée par la carte 1 sur sa sortie C7, la diode LED2 est éteinte et la diode LED1 émet de la lumière ; et
- lorsque la carte 1 met sa sortie C7 dans un état de haute impédance, les deux diodes LED1 et LED2 sont éteintes.

Selon un mode de réalisation, une résistance R1 est connectée en série avec la diode LED1 entre le noeud 402 et le contact 507 et une résistance R2 est connectée en série avec la diode LED2 entre le noeud 400 et le contact 507. La résistance R1 permet de limiter le courant circulant dans la diode LED1 lorsqu'elle émet de la lumière, la résistance R2 permettant de limiter le courant circulant dans la diode LED2 lorsqu'elle émet de la lumière.

Par exemple, la cathode de la diode LED1 est reliée au noeud 402 par la résistance R1, une première borne de la résistance R1 étant, par exemple, connectée à la cathode de la diode LED1 et une deuxième borne de la résistance R1 étant, par exemple, connectée au noeud 402.

Par exemple, l'anode de la diode LED2 est reliée au noeud 400 par la résistance R2, une première borne de la résistance R2 étant, par exemple, connectée à l'anode de la diode LED2 et une deuxième borne de la résistance R2 étant, par exemple, connectée au noeud 400.

Selon un mode de réalisation, une résistance R3 est connectée entre la cathode de la diode LED1 et l'anode de la diode LED2. Par exemple, une borne de la résistance R3 est connectée à la cathode de la diode LED1, l'autre borne de la résistance R3 étant connectée à l'anode de la diode LED2. La résistance R3 permet d'éviter que les deux diodes LED1 et LED2 ne s'allument simultanément lorsque la zone de contact C7 est dans un état haute impédance.

Selon un mode de réalisation, la carte 1 met en oeuvre une phase d'enrôlement lorsqu'elle reçoit la tension Vcc sur la zone de contact C1, la tension Gnd sur la zone de contact C5, la tension de référence Gnd ou bien la tension Vcc sur la zone de contact C3 et la tension Vcc sur la zone C2. Dans ce cas, le connecteur 5 comprend en outre un contact 503 configuré pour venir au contact de la zone de contact C3 et un contact 502 configuré pour venir au contact de la zone de contact C2 lorsque la carte 1 est reçue par le connecteur 5. Le noeud 402 ou bien le noeud 400 est alors connecté au contact 503, de sorte que la tension Gnd ou bien Vcc soit appliquée sur la zone de contact 503. Dans l'exemple de la figure 2, le contact 503 est connecté au noeud 402. En outre, le noeud 400 est alors connecté au contact 502, de sorte que la tension Vcc soit appliquée sur la zone de contact C2. Il suffit alors d'insérer la carte 1 dans le connecteur 5 du dispositif 4 pour déclencher la mise en oeuvre d'une phase d'enrôlement par la carte 1.

A titre d'exemple, dans le dispositif 4 :
- la diode LED1 est configurée pour émettre de la lumière rouge et sa tension de seuil est égale à 1,8 V ;
- la diode LED2 est configurée pour émettre de la lumière verte et sa tension de seuil est égale à 1,9 V ;
- la résistance R1 a une valeur égale à 180 Ohms ;
- la résistance R2 a une valeur égale à 220 Ohms ; et
- la résistance R3 a une valeur égale à 220 Ohms.

Toutefois, le dispositif 4 ne se limite pas aux exemples de valeurs donnés ci-dessus, et la personne du métier est en mesure de déterminer la valeur des résistances pour que seule la diode LED1 soit allumée lorsque la tension Vcc est présente sur la zone C7, seule la diode LED2 soit allumée lorsque la tension Gnd est présente sur la zone C7 et les deux diodes LED1 et LED2 soient éteintes lorsqu'un état de haute impédance est présent sur la zone C7. Par exemple, la valeur des résistances peut dépendre de la valeur de la tension Vcc, des seuils de mise en conduction des diodes LED1 et LED2, et de la luminosité souhaitée pour chacune des diodes LED1 et LED2.

Bien que cela ne soit pas représenté, selon un mode de réalisation, le dispositif 4 comprend un boîtier. Le boîtier est configuré pour permettre la réception de la carte par le connecteur 5 et pour permettre à un utilisateur de voir de la lumière émise par les diodes LED1 et LED2. En outre, toutes les connexions entre les contacts électriques 501, 505, 507, et éventuellement 502 et/ou 503, les éventuelles résistances R1, R2 et R3, les diodes LED1 et LED2 et les noeuds 400 et 402 sont disposées à l'intérieur du boîtier. En outre, les éventuelles résistances R1, R2 et R3 sont disposées dans le boîtier, de même que les noeuds 400 et 402.

A titre d'exemple, les bornes de connexion des diodes LED1 et LED2 sont disposées dans le boîtier et une partie des diodes LED1 et LED2 est disposée hors du boîtier, de manière que la lumière émise par les diodes LED1 et LED2 soit visible par un utilisateur. Selon un autre exemple, les diodes LED1 et LED2 sont entièrement disposées dans le boîtier, et la partie du boîtier qui est disposée en vis-à-vis des diodes LED1 et LE2 est transparente à la lumière émise par les diodes LED1 et LED2, de manière que la lumière émise par les diodes LED1 et LED2 soit visible par un utilisateur.

A titre d'exemple, le connecteur 5 est entièrement disposé dans le boîtier, ce dernier comportant une fente par laquelle la carte 1 peut être insérée dans le connecteur 5. Selon un autre exemple, une partie du connecteur 5 dépasse hors du boîtier 5 et comprend un passage pour insérer la carte 1 dans le connecteur 5.

La mise en oeuvre d'un tel boîtier est à la portée de la personne du métier.

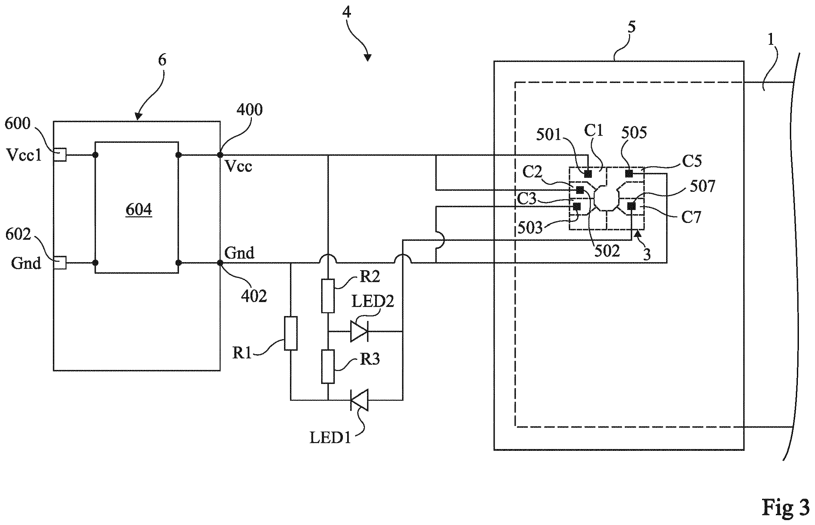

La figure 3 représente, de manière très schématique et en vue de dessus, un autre mode de réalisation du dispositif 4.

Plus exactement, le dispositif 4 de la figure 3 comprend de nombreux éléments en commun avec le dispositif 4 de la figure 2, qui ne seront pas décrit de nouveau, et tous ce qui a été indiqué pour le dispositif 4 décrit en relation avec la figure 2 s'applique au dispositif 4 de la figure 3.

Le dispositif 4 de la figure 3 diffère toutefois de celui de la figure 2 en ce qu'il comprend en outre un connecteur 6.

Le connecteur 6 est configuré pour coopérer avec une source d'alimentation (non représentée en figure 3), c'est-à-dire pour être connecté à une source d'alimentation. Ainsi, le connecteur 6 reçoit une puissance d'alimentation électrique de la source d'alimentation. A titre d'exemple, le connecteur 6 comprend au moins deux bornes ou contacts électriques 600 et 602, le contact 600 étant configuré pour recevoir une tension d'alimentation Vcc1 de la source d'alimentation et le contact 602 étant configuré pour recevoir une tension de référence, par exemple la tension Gnd, de la source d'alimentation.

Le connecteur 6 est configuré pour fournir la tension d'alimentation Vcc au noeud 400 et la tension Gnd au noeud 402, à partir des tensions Vcc1 et Gnd fournies par la source d'alimentation à laquelle est couplé le connecteur 6. Le dispositif 4 est, de préférence, dépourvu de batterie. A titre d'exemple, le connecteur 6 est relié, par exemple connecté, aux noeuds 400 et 402.

Selon un mode de réalisation, le connecteur 6 est un connecteur de type bus série universel ("universal serial bus"), ou USB, par exemple un connecteur mâle. Dans ce cas, les bornes 600 et 602 du connecteur 6 sont destinées à coopérer avec des bornes correspondantes d'un connecteur de type USB complémentaire du connecteur 6, par exemple un connecteur femelle. En outre, bien que cela ne soit pas représenté, le connecteur 6 peut alors comprendre d'autres bornes ou contacts destinés à coopérer avec des bornes ou contacts correspondants du connecteur USB complémentaire du connecteur 6.

Un avantage de prévoir le connecteur 6 de type USB est que de très nombreux dispositifs peuvent alors servir de source d'alimentation, par exemple des ordinateurs, notamment portables, des téléphones mobiles embarquant une fonction USB, des batteries de recharge USB, des chargeurs USB, etc.

Selon un mode de réalisation, en particulier quand le connecteur 6 est un connecteur USB, le connecteur 6 comprend un circuit d'interface 604. Le circuit 604 d'interface est configuré pour recevoir la puissance électrique d'alimentation délivrée par la source d'alimentation à laquelle le connecteur 6 est couplé, et pour fournir, à partir de cette puissance d'alimentation, les tensions Vcc et Gnd aux noeuds respectifs 400 et 402. A titre d'exemple, le circuit 604 est relié, par exemple connecté, aux contacts 600 et 602 du connecteur 6, et aux noeuds 400 et 402. A titre d'exemple, lorsque la tension Vcc1 est supérieure à la tension Vcc d'alimentation de la carte 1, le circuit 604 est configuré pour générer la tension Vcc à une valeur adaptée à la carte 1, à partir de la tension Vcc1, le circuit 604 comprenant alors, par exemple, un convertisseur de tension continu/continu, ou DC/DC.

Selon un mode de réalisation où le dispositif 4 comprend un boîtier, le connecteur 6 est au moins en partie disposé à l'intérieur du boîtier, et le boîtier est configuré pour permettre le couplage du connecteur 6 avec un connecteur complémentaire d'une source d'alimentation. Par exemple, le connecteur 6 est un connecteur mâle comportant une partie munie des contacts 600 et 602 qui est disposée à l'extérieur du boitier, et une partie, par exemple comportant le circuit 604, qui est disposée à l'intérieur du boitier.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, bien que l'on ait décrit le dispositif 4 dans le cas où celui-ci est configuré pour coopérer avec la carte 1, notamment quand la carte 1 est conforme aux normes ISO/IEC 7816-1, 7816-2 et 7816-3, le dispositif 4 peut être adapté par la personne du métier à des cartes à microcircuit muni d'un capteur biométrique qui soient différentes de la carte 1, par exemple qui comprennent des LEDS et/ou qui ne soient pas conformes aux normes susmentionnées. Par ailleurs, le dispositif 4, qui permet d'alimenter une carte à microcircuit et d'envoyer, sous le contrôle de la carte, des informations lumineuses à un utilisateur, peut être utilisé lors d'autres phases de fonctionnement qu'une phase d'enrôlement, par exemple pour indiquer, quand la carte 1 est insérée dans le dispositif 4, si un doigt présent sur le capteur 2 correspond à l'empreinte enregistrée dans la carte 1 lors d'une précédente phase d'enrôlement. Le dispositif 4 peut en outre être utilisé avec une carte à microcircuit similaire à la carte 1 mais dépourvue de capteur 2.

Enfin, la mise en oeuvre pratique des modes de réalisation et variantes décrits est à la portée de la personne du métier à partir des indications fonctionnelles données ci-dessus. En particulier, la programmation de la carte à microcircuit, notamment de manière que celle-ci pilote les diodes LED1 et LED2 lorsqu'elle est connectée au dispositif 4, est à la portée de la personne du métier, par exemple en consultant les spécifications techniques et/ou les notices d'utilisation de la carte.

## Revendications

1. Dispositif (4) comprenant :
un premier noeud (400) configuré pour recevoir une tension d'alimentation (Vcc) ;
un deuxième noeud (402) configuré pour recevoir une tension de référence (Gnd) ;
un premier connecteur (5) configuré pour recevoir une carte à microcircuit (1), le premier connecteur (5) comprenant :
- un premier contact électrique (501) connecté au premier noeud (400) et configuré pour venir au contact d'une première zone de contact électrique (C1) de la carte (1) destinée à recevoir la tension d'alimentation (Vcc),
- un deuxième contact électrique (505) connecté au deuxième noeud (402) et configuré pour venir au contact d'une deuxième zone de contact électrique (C5) de la carte (1) destinée à recevoir la tension de référence (Gnd), et
- un troisième contact électrique (507) configuré pour venir au contact d'une troisième zone de contact électrique (C7) de la carte (1) correspondant à une sortie trois états ;
une première diode électroluminescente (LED1) ayant une anode reliée au troisième contact (507) et une cathode reliée au deuxième noeud (402) ;
une deuxième diode électroluminescente (LED2) ayant une cathode reliée au troisième contact (507) et une anode reliée au premier noeud (400) ;
une première résistance (R1) connectée en série avec la première diode (LED1) entre le deuxième noeud (402) et le troisième contact (507) ;
une deuxième résistance (R2) connectée en série avec la deuxième diode (LED2) entre le premier noeud (400) et le troisième contact (507); et
une troisième résistance (R3) reliant l'anode de la deuxième diode (LED2) à la cathode de la première diode (LED1), dans lequel les valeurs desdites résistances (R1, R2, R3) sont déterminées de manière que :
la première diode (LED1) est allumée et la deuxième diode (LED2) est éteinte lorsque la sortie trois états (C7) est à la tension d'alimentation (Vcc) ;
la première diode (LED1) est éteinte et la deuxième diode est allumée (LED2) lorsque la sortie trois états (C7) est à la tension de référence (Gnd) ; et
les première et deuxième diodes (LED1, LED2) sont éteintes lorsque la sortie trois états (C7) est dans un état de haute impédance.

2. Dispositif selon la revendication 1, dans lequel la sortie trois états (C7) est de type entrée/sortie à usage générale, GPIO.

3. Dispositif selon la revendication 1 ou 2, dans lequel le premier connecteur (5) comprend en outre un quatrième contact électrique (503) connecté au deuxième noeud (402) ou au premier noeud (400) et configuré pour venir au contact d'une quatrième zone de contact électrique (C3) de la carte (1) configurée pour recevoir un signal d'horloge.

4. Dispositif selon la revendication 3, dans lequel le premier connecteur (5) comprend en outre un cinquième contact électrique (502) connecté au premier noeud (400) et configuré pour venir au contact d'une cinquième zone de contact électrique (C2) de la carte (1) configurée pour recevoir un signal d'initialisation.

5. Dispositif selon l'une quelconque des revendications 1 à 4, comprenant en outre un deuxième connecteur (6) configuré pour coopérer avec une source d'alimentation et pour fournir la tension d'alimentation (Vcc) au premier noeud (400) et la tension de référence (Gnd) au deuxième noeud (402), le dispositif (4) étant dépourvu de batterie.

6. Dispositif selon la revendication 5, dans lequel le deuxième connecteur (6) est de type bus série universel, USB.

7. Dispositif selon la revendication 6, dans lequel le deuxième connecteur (6) comprend un circuit d'interface (604) configuré pour recevoir une puissance électrique d'alimentation lorsque le deuxième connecteur (6) est couplé à un connecteur complémentaire de la source d'alimentation, et pour fournir la tension de référence (Gnd) et la tension d'alimentation (Vcc) à partir d'une puissance électrique d'alimentation délivrée par la source d'alimentation.

8. Dispositif selon l'une quelconque des revendications 1 à 7, dans lequel la carte (1) est conforme aux normes ISO/IEC 7816-1, ISO/IEC 7816-2 et ISO/IEC 7816-3, la carte (1) appartenant de préférence à la classe A de la norme ISO/IEC 7816-3.

9. Dispositif selon la revendication 8, dans lequel la première zone de contact (C1) correspond au contact C1 des normes ISO/IEC 7816-2 et ISO/IEC 7816-3, la deuxième zone de contact (C5) correspond au contact C5 des normes ISO/IEC 7816-2 et ISO/IEC 7816-3, et la troisième zone de contact (C7) correspond au contact C7 des normes ISO/IEC 7816-2 et ISO/IEC 7816-3.

10. Dispositif selon l'une quelconque des revendications 1 à 9, dans lequel la tension d'alimentation (Vcc), référencée par rapport à la tension de référence (Gnd), est comprise entre 4,75 V et 5,25 V.

11. Dispositif selon l'une quelconque des revendications 1 à 10, comprenant un boîtier configuré pour permettre la réception de la carte (1) par le premier connecteur (5) et pour permettre à un utilisateur de voir de la lumière émise par les diodes (LED1, LED2), des connexions reliant les contacts électriques (501, 503, 505, 507) et les premier et deuxième noeuds (400, 402) entre eux et aux diodes (LED1, LED2) étant disposées à l'intérieur du boîtier.

12. Procédé d'utilisation d'un dispositif (4) selon l'une quelconque des revendications 1 à 11, dans lequel :
la première diode (LED1) est allumée et la deuxième diode (LED2) est éteinte en appliquant la tension d'alimentation (Vcc) sur le troisième contact (507) ;
la première diode (LED1) est éteinte et la deuxième diode (LED2) est allumée en appliquant la tension de référence (Gnd) sur le troisième contact (507) ; et
les première et deuxième diodes (LED1, LED2) sont éteintes en appliquant un état haute impédance sur le troisième contact (507).

## Patentansprüche

1. Vorrichtung (4), die Folgendes aufweist:
einen ersten Knoten (400), der konfiguriert ist zum Empfangen einer Stromversorgungsspannung (Vcc);
einen zweiten Knoten (402), der konfiguriert ist zum Empfangen einer Referenzspannung (Gnd);
einen ersten Verbinder (5), der zur Aufnahme einer Chipkarte (1) konfiguriert ist, wobei der erste Verbinder (5) Folgendes aufweist:
- einen ersten elektrischen Kontakt (501), der mit dem ersten Knoten (400) verbunden und der konfiguriert ist zum In-Kontakt-Kommen mit einem ersten elektrischen Kontaktbereich (C1) der Karte (1), der dazu bestimmt ist, die Stromversorgungsspannung (Vcc) zu empfangen,
- einen zweiten elektrischen Kontakt (505), der mit dem zweiten Knoten (402) verbunden und der konfiguriert ist zum In-Kontakt-Kommen mit einem zweiten elektrischen Kontaktbereich (C5) der Karte (1), der dazu bestimmt ist, die Referenzspannung (Gnd) zu empfangen, und
- einen dritten elektrischen Kontakt (507), der konfiguriert ist zum In-Kontakt-Kommen mit einem dritten elektrischen Kontaktbereich (C7) der Karte (1), der einem Drei-Zustands-Ausgang entspricht;
eine erste Leuchtdiode (LED1) mit einer Anode, die mit dem dritten Kontakt (507) gekoppelt ist, und einer Kathode, die mit dem zweiten Knoten (402) gekoppelt ist;
eine zweite lichtemittierende Diode (LED2), mit einer Kathode, die mit dem dritten Kontakt (507) und einer Anode, die mit dem ersten Knoten (400) verbunden ist;
einen ersten Widerstand (R1), der mit der ersten Diode (LED1) zwischen dem zweiten Knoten (402) und dem dritten Kontakt (507) in Reihe geschaltet ist;
einen zweiten Widerstand (R2), der mit der zweiten Diode (LED2) zwischen dem ersten Knoten (400) und dem dritten Kontakt (507) in Reihe geschaltet ist; und
einen dritten Widerstand (R3), der die Anode der zweiten Diode (LED2) mit der Kathode der ersten Diode (LED1) koppelt, wobei die Werte der Widerstände (R1, R2, R3) so bestimmt sind, dass:
die erste Diode (LED1) eingeschaltet und die zweite Diode (LED2) ausgeschaltet ist, wenn der Drei-Zustands-Ausgang (C7) auf der Stromversorgungsspannung (Vcc) liegt;
die erste Diode (LED1) ausgeschaltet und die zweite Diode (LED2) eingeschaltet ist, wenn der Drei-Zustands-Ausgang (C7) auf der Referenzspannung (Gnd) liegt; und
die erste und die zweite Diode (LED1, LED2) ausgeschaltet sind, wenn sich der Drei-Zustands-Ausgang (C7) in einem Zustand hoher Impedanz befindet.

2. Vorrichtung nach Anspruch 1, wobei der Drei-Zustands-Ausgang (C7) vom Typ Allzweck-Eingang/Ausgang, GPIO, ist.

3. Vorrichtung nach Anspruch 1 oder 2, wobei der erste Verbinder (5) ferner einen vierten elektrischen Kontakt (503) aufweist, der mit dem zweiten Knoten (402) oder dem ersten Knoten (400) verbunden und der konfiguriert ist zum In-Kontakt-Kommen mit einem vierten elektrischen Kontaktbereich (C3) der Karte (1), der konfiguriert ist zum Empfangen eines Taktsignals.

4. Vorrichtung nach Anspruch 3, wobei der erste Verbinder (5) ferner einen fünften elektrischen Kontakt (502) aufweist, der mit dem ersten Knoten (400) verbunden ist und der konfiguriert ist zum In-Kontakt-Kommen mit einem fünften elektrischen Kontaktbereich (C2) der Karte (1), der konfiguriert ist zum Empfang eines Initialisierungssignals.

5. Vorrichtung nach einem der Ansprüche 1 bis 4, die ferner einen zweiten Anschluss (6) aufweist, der konfiguriert ist zum Kooperieren mit einer Stromquelle und zum Liefern der Stromversorgungsspannung (Vcc) an den ersten Knoten (400) und der Referenzspannung (Gnd) an den zweiten Knoten (402), wobei die Vorrichtung (4) keine Batterie aufweist.

6. Vorrichtung nach Anspruch 5, wobei der zweite Anschluss (6) vom Typ Universal Serial Bus, USB, ist.

7. Vorrichtung nach Anspruch 6, wobei der zweite Verbinder (6) eine Schnittstellenschaltung (604) aufweist, die konfiguriert ist zum Empfangen einer elektrische Versorgungsleistung, wenn der zweite Verbinder (6) mit einem komplementären Verbinder der Stromquelle gekoppelt ist, und zum Liefern der Referenzspannung (Gnd) und die Stromversorgungsspannung (Vcc) auf der Grundlage einer von der Stromquelle gelieferten elektrischen Versorgungsleistung.

8. Vorrichtung nach einem der Ansprüche 1 bis 7, wobei die Karte (1) den Normen ISO/IEC 7816-1, ISO/IEC 7816-2 und ISO/IEC 7816-3 entspricht, wobei die Karte (1) vorzugsweise zur Klasse A der Norm ISO/IEC 7816-3 gehört.

9. Vorrichtung nach Anspruch 8, wobei der erste Kontaktbereich (C1) dem Kontakt C1 der Normen ISO/IEC 7816-2 und ISO/IEC 7816-3 entspricht, der zweite Kontaktbereich (C5) dem Kontakt C5 der Normen ISO/IEC 7816-2 und ISO/IEC 7816-3 entspricht und der dritte Kontaktbereich (C7) dem Kontakt C7 der Normen ISO/IEC 7816-2 und ISO/IEC 7816-3 entspricht.

10. Vorrichtung nach einem der Ansprüche 1 bis 9, wobei die Stromversorgungsspannung (Vcc), bezogen auf die Referenzspannung (Gnd), im Bereich von 4,75 V bis 5,25 V liegt.

11. Vorrichtung nach einem der Ansprüche 1 bis 10, aufweisend ein Gehäuse, das so konfiguriert ist, dass es die Aufnahme der Karte (1) durch den ersten Verbinder (5) ermöglicht und es einem Benutzer erlaubt, das von den Dioden (LED1, LED2) emittierte Licht zu sehen, wobei Verbindungen, die die elektrischen Kontakte (501, 503, 505, 507) und den ersten und zweiten Knoten (400, 402) miteinander und mit den Dioden (LED1, LED2) koppeln, innerhalb des Gehäuses angeordnet sind.

12. Verfahren zur Verwendung einer Vorrichtung (4) nach einem der Ansprüche 1 bis 11, wobei:
die erste Diode (LED1) eingeschaltet und die zweite Diode (LED2) ausgeschaltet wird durch das Anlegen der Stromversorgungsspannung (Vcc) an den dritten Kontakt (507);
die erste Diode (LED1) ausgeschaltet und die zweite Diode (LED2) eingeschaltet wird durch das Anlegen der Referenzspannung (Gnd) an den dritten Kontakt (507); und
die erste und die zweite Diode (LED1, LED2) durch das Anlegen eines Zustands hoher Impedanz an den dritten Kontakt (507) ausgeschaltet werden.

## Claims

1. Device (4) comprising:
a first node (400) configured to receive a power supply voltage (Vcc);
a second node (402) configured to receive a reference voltage (Gnd);
a first connector (5) configured to receive a smart card (1), the first connector (5) comprising:
- a first electric contact (501) connected to the first node (400) and configured to come into contact with a first electric contact area (C1) of the card (1) intended to receive the power supply voltage (Vcc),
- a second electric contact (505) connected to the second node (402) and configured to come into contact with a second electric contact area (C5) of the card (1) intended to receive the reference voltage (Gnd), and
- a third electric contact (507) configured to come into contact with a third electric contact area (C7) of the card (1) corresponding to a three-state output;
a first light-emitting diode (LED1) having an anode coupled to the third contact (507) and a cathode coupled to the second node (402);
a second light-emitting diode (LED2) having a cathode coupled to the third contact (507) and an anode coupled to the first node (400);
a first resistor (R1) series-connected with the first diode (LED1) between the second node (402) and the third contact (507);
a second resistor (R2) series-connected with the second diode (LED2) between the first node (400) and the third contact (507); and
a third resistor (R3) coupling the anode of the second diode (LED2) to the cathode of the first diode (LED1), wherein the values of said resistors (R1, R2, R3) are determined so that:
the first diode (LED1) is on and the second diode (LED2) is off when the three-state output (C7) is at the power supply voltage (Vcc);
the first diode (LD1) is off and the second diode is on (LED2) when the three-state output (C7) is at the reference voltage (Gnd); and
the first and second diodes (LED1, LED2) are off when the three-state output (C7) is in a high-impedance state.

2. Device according to claim 1, wherein the three-state output (C7) is of general purpose input/output, GPIO, type.

3. Device according to claim 1 or 2, wherein the first connector (5) further comprises a fourth electric contact (503) connected to the second node (402) or to the first node (400) and configured to come into contact with a fourth electric contact area (C3) of the card (1) configured to receive a clock signal.

4. Device according to claim 3, wherein the first connector (5) further comprises a fifth electric contact (502) connected to the first node (400) and configured to come into contact with a fifth electric contact area (C2) of the card (1) configured to receive an initialization signal.

5. Device according to any of claims 1 to 4, further comprising a second connector (6) configured to cooperate with a power source and to deliver the power supply voltage (Vcc) to the first node (400) and the reference voltage (Gnd) to the second node (402), the device (4) comprising no battery.

6. Device according to claim 5, wherein the second connector (6) is of universal serial bus, USB, type.

7. Device according to claim 6, wherein the second connector (6) comprises an interface circuit (604) configured to receive an electric supply power when the second connector (6) is coupled to a complementary connector of the power source, and to deliver the reference voltage (Gnd) and the power supply voltage (Vcc) based on an electric supply power delivered by the power source.

8. Device according to any of claims 1 to 7, wherein the card (1) complies with the ISO/IEC 7816-1, ISO/IEC 7816-2, and ISO/IEC 7816-3 standards, the card (1) preferably belonging to class A of the ISO/IEC 7816-3 standard.

9. Device according to claim 8, wherein the first contact area (C1) corresponds to contact C1 of the ISO/IEC 7816-2 and ISO/IEC 7816-3 standards, the second contact area (C5) corresponds to contact C5 of the ISO/IEC 7816-2 and ISO/IEC 7816-3 standards, and the third contact area (C7) corresponds to contact C7 of the ISO/IEC 7816-2 and ISO/IEC 7816-3 standards.

10. Device according to any of claims 1 to 9, wherein the power supply voltage (Vcc), referenced to the reference voltage (Gnd), is in the range from 4.75 V to 5.25 V.

11. Device according to any of claims 1 to 10, comprising a package configured to allow the reception of the card (1) by the first connector (5) and to enable a user to see light emitted by the diodes (LED1, LED2), connections coupling the electric contacts (501, 503, 505, 507) and the first and second nodes (400, 402) together and to the diodes (LED1, LED2) being arranged within the package.

12. Method of using a device (4) according to any of claims 1 to 11, wherein:
the first diode (LED1) is turned on and the second diode (LED2) is turned off by the application of the power supply voltage (Vcc) to the third contact (507);
the first diode (LED1) is turned off and the second diode (LED2) is turned on by the application of the reference voltage (Gnd) to the third contact (507); and
the first and second diodes (LED1, LED2) are turned off by the application of a high-impedance state to the third contact (507).
